# EUROPEAN PATENT SPECIFICATION

(11) **EP 3 392 089 B1**
(45) Date of publication and mention of the grant of the patent: **19.02.2020**
(21) Application number: 18167636.2
(22) Date of filing: 17.04.2018
(51) Int. Cl.: B60R 16/02, B60J 5/04

(54) **WIRE ROUTING SYSTEM FOR THE DOOR OF A WORK VEHICLE**
DRAHTFÜHRUNG FÜR DIE TÜR EINES NUTZFAHRZEUGS
GUIDE-FIL POUR LA PORTE D'UN VÉHICULE UTILITAIRE

(30) Priority: 20.04.2017 US 201715492793
(43) Date of publication of application: 24.10.2018
(73) Proprietor: CNH Industrial Italia S.p.A., 10135 Torino (IT)
(72) Inventor: LINK, John F., Calumet City, IL 60409 (US)
(74) Representative: CNH Industrial IP Department

(56) References cited:
- JP-A- H06 278 460
- JP-A- 2000 232 717
- JP-A- 2001 138 834
- JP-A- 2001 145 244
- JP-A- 2003 297 475

## Description

### BACKGROUND

The present application relates generally to work vehicles, and more particularly, to a wire routing system for a work vehicle.

Generally, work vehicles (e.g., tractors, harvesters, trucks, skid steers, or other prime movers) may be operated at worksites (e.g., agricultural fields or contstruction sites). Such work vehicles may include movable components, such as a door of a cab that facilitates ingress and egress of an operator. For example, the door may be movably coupled to the cab, and the door may move between an open position that enables the operator to enter the cab and a closed position that blocks access to the cab and/or that encloses the operator within the cab during operation of the work vehicle. In certain work vehicles, movement of the door between the open position and the closed position may limit the use of and/or interfere with wires (e.g., electrical wires) that extend between a fixed frame of the cab and a panel of the door. JP 2001145244A discloses a wiring harness unreeled and reeled to a maximum length, following door opening/closing operation without increase in the diameter of a harness reeling, JP2000232717 discloses a protection for a curled cord used as the jumper part of a wire harness between a backdoor and a glass hatch by making the curled cord unseen from a cabin side

The aforementioned problems are solved by means of a work vehicle according to claim 1.

### BRIEF DESCRIPTION

References to "embodiments" throughout the description which are not under the scope of the appended claims merely represent possible exemplary executions and are therefore not part of the present invention.

Certain embodiments commensurate in scope with the present disclosure are summarized below. These embodiments are not intended to limit the scope of the claims, but rather these embodiments are intended only to provide a brief summary of possible forms of the system and/or methods disclosed herein. Indeed, the systems and/or methods may encompass a variety of forms that may be similar to or different from the embodiments set forth below.

A first embodiment includes a wire routing system for use in a work vehicle. The wire routing system includes a tubular support member coupled to a door of the work vehicle and a coil wire configured to conduct current from a power supply within the work vehicle to an electrical component supported by the door. A coiled portion of the coil wire is configured to be disposed within the tubular support member and to transition from a retracted position when the door is in a closed position to an extended position when the door is in an open position

A second embodiment includes a system for use within a work vehicle. The system includes an electrical component configured to be supported by a movable component of the work vehicle and a coil wire configured to extend between and electrically couple the electrical component to a power supply supported within a frame of the work vehicle. The coil wire includes a coiled portion that is configured to be supported within a tubular support member coupled to the movable component and that is configured to transition from a retracted position when the movable component is in a first position to an extended position when the movable component is in a second position.

According to the invention a work vehicle according to claim 1 is provided having a vehicle frame defining an operator cabin and supporting a power supply, a door having a tubular support member and supporting an electrical component, and a coil wire that extends from the power supply and through the tubular support member to the electrical component, wherein a coiled portion of the coil wire is configured to transition from a retracted position when the door is in a closed position to an extended position when the door is in an open position.

### DRAWINGS

These and other features, aspects, and advantages of the present disclosure will become better understood when the following detailed description is read with reference to the accompanying drawings in which like characters represent like parts throughout the drawings, wherein:
FIG. 1 is a perspective side view of a work vehicle that includes a door and a wire routing system, in accordance with an embodiment of the present disclosure;
FIG. 2 is a perspective side view of a portion of the door and the wire routing system of FIG. 1, in accordance with an embodiment of the present disclosure;
FIG. 3 is a side view of the wire routing system of FIG. 1, in accordance with an embodiment of the present disclosure;
FIG. 4 a perspective side view of a strain relief device and a hollow member of the wire routing system of FIG. 1, in accordance with an embodiment of the present disclosure;
FIG. 5 is a perspective top view of the strain relief device and the hollow member of FIG. 4, in accordance with an embodiment of the present disclosure;
FIG. 6 is a perspective front view of the strain relief device of FIG. 4, in accordance with an embodiment of the present disclosure;
FIG. 7 illustrates a coil cord assembly having a strain relief device that may be used in the wire routing system of FIG. 1, in accordance with an embodiment of the present disclosure.
FIG. 8 is a side view of a wire routing system having multiple coiled wires that may be used in the work vehicle of FIG. 1, in accordance with an embodiment of the present disclosure; and
FIG. 9 is a perspective view of the multiple coiled wires of FIG. 8, in accordance with an embodiment of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

The embodiments disclosed herein relate generally to wire routing systems for work vehicles (e.g., tractors, harvesters, trucks, skid steers, or other prime movers). Certain work vehicles may include movable components, such as a door that is movably coupled to a cabin and that facilitates ingress and egress of an operator. In some work vehicles, it may be desirable to attach or include various electrical components within the door (e.g., electric locks, window wipers, power windows, lights, alarms, or the like). The wire routing systems disclosed herein may include a coil cord (e.g., a retractable and/or extendable cord having conductive wires) configured to extend from a power supply supported in a fixed position relative to a frame of the work vehicle to an electrical component supported by the door of the work vehicle. In some embodiments, a coiled portion (e.g., looped portion) of the coil cord may be supported within a hollow member (e.g., annular or cylindrical tube, conduit, or pipe) of the door, and a straight portion of the coil cord may extend from an end of the hollow member and through a strain relief device (e.g., a grommet, a bushing, an annular sleeve, a snap-on strain relief housing, or the like) supported within the frame of the work vehicle. The disclosed embodiments may provide a compact, simple, and/or low-cost wire routing system that may be efficiently installed into the work vehicle. Certain components of the wire routing system may support the coil cord and/or protect the coil cord from damage as the door moves between an open position and a closed position, thereby facilitating use of various electrical components within the door.

To facilitate discussion, certain examples in the present disclosure are described in relation to a tractor. However, it should be appreciated that the embodiments and techniques described herein are not limited to tractors, and the wire routing system may be implemented in any suitable type of work vehicle, such as harvesters, trucks, and skid steers, for example. Moreover, certain examples in the present disclosure are described in relation to components supported by a door of a work vehicle. However, it should be understood that the wire routing systems may be utilized with components located in any movable structure (e.g., hood) of the work vehicle. Furthermore, certain examples in the present disclosure are described in relation to electrical cables and components. However, it should be appreciated that the embodiments and techniques described herein may be adapted to include hydraulic or pneumatic conduits and components, for example.

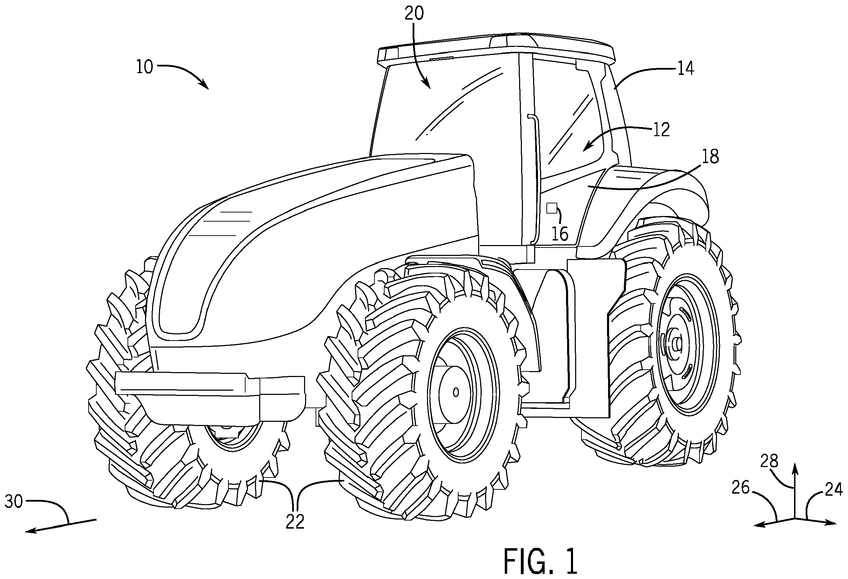

With the foregoing in mind, FIG. 1 is a perspective view of an exemplary work vehicle 10 (e.g., tractor) that includes a wire routing system 12 that facilitates coupling a power supply supported within a frame 14 (e.g., fixed support structure) of the work vehicle 10 to an electrical component 16 (e.g., electric locks, window wipers, power windows, lights, alarms, or the like) supported by a door 18 of the work vehicle 10. The door 18 may be configured to move relative to the frame 14 of the work vehicle 10 to enable an operator to access and/or exit from a cabin 20 (e.g., operator cabin or cab) where the operator may sit or stand to operate the work vehicle 10. As shown, the work vehicle 10 includes wheels 22 that rotate to move the work vehicle 10. However, it should be understood that in some vehicles, the wheels 22 may be replaced with tracks or other drive systems. The work vehicle 10 and the components therein may be described with reference to a lateral axis or direction 24, a longitudinal axis or direction 26, a vertical axis or direction 28, and a forward direction 30 (e.g., forward direction of travel).

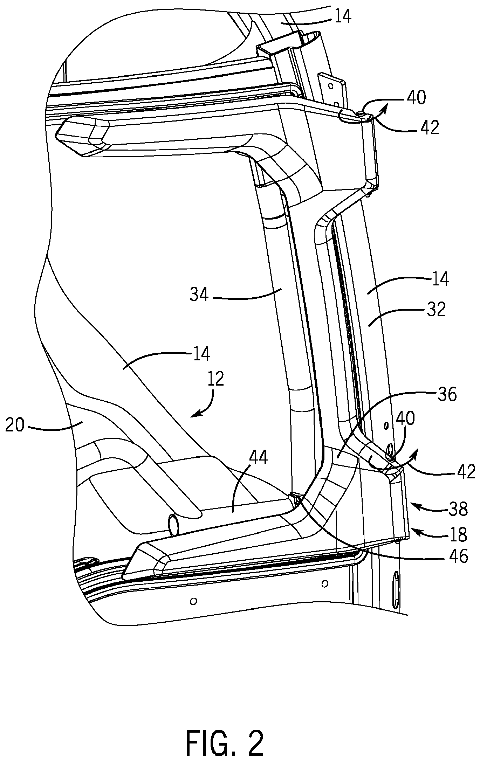

FIG. 2 is a perspective view of a portion of the door 18 and the wire routing system 12. As shown, the frame 14 surrounds and/or defines the cabin 20 and may include one or more trim panels 32 (e.g., molded trim panels, interior trim panels, exterior trim panels) that are visible to the operator. In the illustrated embodiment, the door 18 includes a door frame 34 (e.g., rigid support structure) configured to support an exterior door panel 36 (e.g., molded door panel) that may be visible to the operator. The door 18 is configured to move relative to the frame 14 between an open position to enable the operator to enter the cabin 20 and the illustrated closed position 38 to block access to the cabin 20 and/or to enclose the operator within the cabin 20. In the illustrated embodiment, the door 18 is pivotally coupled to the frame 14 via one or more hinges 40 (e.g., pivots), which may be positioned laterally outwardly of the frame 14, the door frame 34, and/or the cabin 20. The door 18 may move from the closed position 38 to an open position via rotation about the one or more hinges 40, as shown by arrow 42.

As discussed in more detail below, the wire routing system 12 includes a hollow member 44 (e.g., annular or cylindrical tube, conduit, pipe, or tubular support member) that is configured to receive and/or to support a coil cord. In the illustrated embodiment, the hollow member 44 is part of the door frame 34, and thus, may contact, be coupled to, and/or structurally support interior and/or exterior door panels (e.g., the exterior door panel 36), window panes of the door 18, or the like. However, it should be understood that the hollow member 44 may be physically separate and distinct from the door frame 34 and may be coupled to the door frame 34 and/or supported by another component of the door 18 in a manner that enables the hollow member 44 to move with the door 18. As shown, the hollow member 44 may be positioned laterally inwardly of the one or more hinges 40 and/or the exterior door panel 36. In the illustrated embodiment, the hollow member 44 is coupled to the exterior door panel 36 via a support bracket 46.

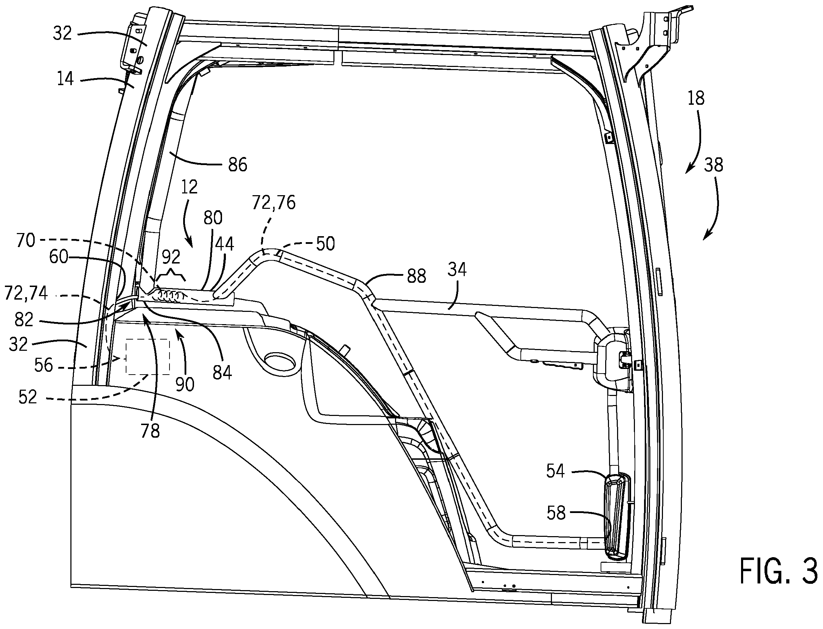

FIG. 3 is a side view of the wire routing system 12. As shown, the hollow member 44 supports a coil cord 50 (e.g., coil wire, a retractable and/or extendable cord having electrically conductive wires supported within an insulating sheath) extending between a power supply 52 (e.g., battery) supported within the frame 14 and/or fixed relative to the frame 14, and an electrical component 54 supported by the door 18 and/or fixed relative to the door 18. In the illustrated embodiment, the electrical component 54 includes a door lock assembly having a lock that is configured to be electrically actuated (e.g., via a solenoid, magnet, motor, or the like) to move between a locked position to block movement of the door 18 relative to the frame 14 and an unlocked position to enable movement of the door 18 relative to the frame 14. However, it should be understood that the electrical component 54 may be any suitable electrically-actuated components, such as window wipers, power windows, lights, alarms, or the like.

The coil cord 50 may extend from a first end portion 56 to a second end portion 58. As shown, the first end portion 56 is coupled to the power supply 52 and is positioned within the frame 14 and/or is fixed relative to the frame 14 of the work vehicle 10, while the second end portion 58 is coupled to the electrical component 54 within the door 18 and/or is fixed relative to the door 18. As discussed in more detail below, the coil cord 50 may extend from the power supply 52, through an opening 60 formed in the trim panel 32, and through the hollow member 44 to the electrical component 54. In the illustrated embodiment, the electrical component 54 is positioned forward of and vertically below the opening 60 formed in the trim panel 32. Thus, the coil cord 50 and the hollow member 44 extend generally in the longitudinal direction 26 and the vertical direction 28 between the opening 60 formed in the trim panel 32 and the electrical component 54.

In certain embodiments, the coil cord 50 includes one or more coiled portions 70 (e.g., looped portions) and one or more straight portions 72 (e.g., non-looped portions). In some embodiments, the coiled portion 70 may extend only along a portion of a length (e.g., total length between the first end portion 56 and the second end portion 58) of the coil cord 50 (e.g., less than 2, 3, 4, 5, 10, 14, 25, or 50 percent of the length of the coil cord 50 or between about 2 to 50, 3 to 25, or 5 to 10 percent of the length of the coil cord 50) when the coil cord 50 is in illustrated fully retracted position (e.g., fully compressed position or resting position). In some embodiments, the coiled portion 70 of the coil cord 50 is positioned within the hollow member 44, a first straight portion 72, 74 extends from the coiled portion 70 to the power supply 52 (e.g., across a gap 78 between the hollow member 44 and the opening 60 in the trim panel 32), and a second straight portion 72, 76 extends from the coiled portion 70 to the electrical component 54. In the illustrated embodiment, an entirety of the coiled portion 70 is disposed within the hollow member 44 (i.e., the coiled portion 70 does not extend from the hollow member 44, does not extend across the gap 78, and/or is not visible from inside the cabin 20) when the door 18 is in the closed position 38 and/or when the door 18 is in the open position.

In the illustrated embodiment, the coiled portion 70 is positioned within a longitudinally-extending portion 80 of the hollow member 44. The longitudinally-extending portion 80 of the hollow member 44 includes an opening 82 at a first end 84 proximate to the opening 60 in the trim panel 32 to enable the coil cord 50 to connect to the power supply 52. In the illustrated embodiment, the longitudinally-extending portion 80 is coupled to a vertically-extending portion 86 (e.g., rearward portion) of the door frame 34 and a generally curving or bending portion 88 of the door frame 34. However, it should be understood that the hollow member 44 and/or the door frame 34 may have any of a variety of shapes and configurations suitable to support components of the door 18 and/or to facilitate passage of the coil cord 50.

In certain embodiments, the coil cord 50 is not attached to or fixed within the hollow member 44. In some embodiments, the coil cord 50 is supported at the first end portion 56 via attachment to the power supply 52, at the second end portion 58 via attachment to the electrical component 54, and at the opening 60 of the trim panel 32 of the frame 14 via a strain relief device, such as a grommet, a bushing, an annular sleeve, a snap-on strain relief housing, or the like. As discussed in more detail below, the strain relief device may dimensionally control the position of the coil cord 50 relative to the trim panel 32. In some embodiments, the strain relief device may be positioned such that the coil cord 50 is in some tension even while the door 18 is in the closed position 38 (i.e., the coil cord 50 is in the illustrated retracted position 90 [e.g., partially retracted position] and is not in a fully retracted or compressed state while the door 18 is in the closed position 38) so that the first straight portion 72, 74 of the coil cord 50 that extends across the gap 78 does not bend and/or is protected as the door 18 moves between the closed position 38 and the open position. In operation, the coil cord 50 may be configured to move from the illustrated retracted position 90 when the door 18 is in the closed position 38 to an extended position (e.g., expanded position) when the door 18 is in the open position. Thus, the coiled portion 70 and the coil cord 50 may increase in length as the door 18 moves from the closed position 38 to the open position, and the coil cord 50 may retract to the retracted position 90 as the door 18 moves from the open position to the closed position 38. For example, a length 92 of the coiled portion 70 may increase by greater than or equal to approximately 1, 2, 3, 4, 5, 10, 15, 20, 25, or 50 percent, and/or a length of the coil cord 50 extending between the opening 60 in the trim panel 32 and the electrical component 54 may increase by greater than or equal to approximately 1, 2, 3, 4, 5, 10, 15, 20, or 25 percent. Such a configuration may reduce stress on the coil cord 50 as the door 18 moves from the closed position 38 to the open position and/or may block the door 18 from pinching the coil cord 50 as the door 18 moves from the open position to the closed position 38, for example.

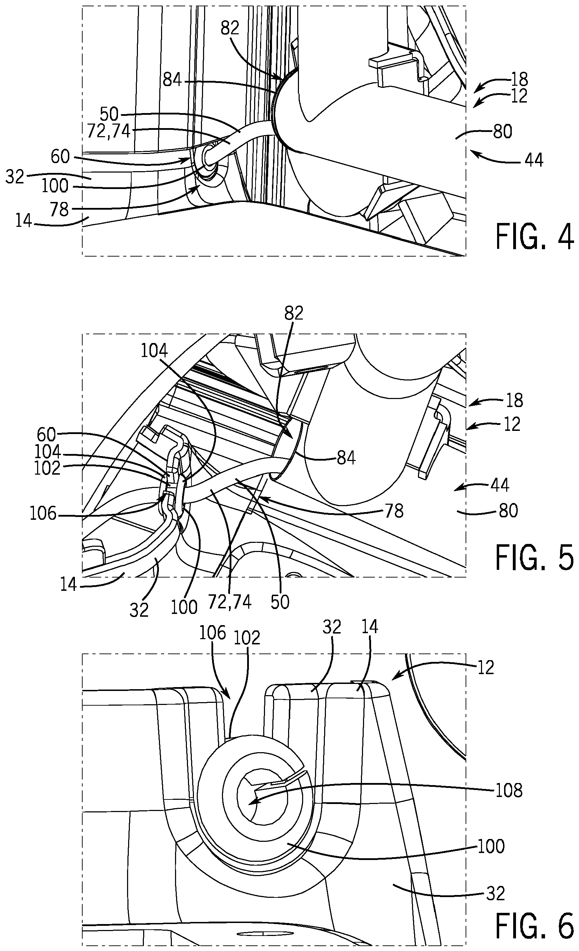

FIG. 4 a perspective side view of an embodiment of a grommet 100 (e.g., a strain relief device, an annular ring, or a c-shaped ring) that may be positioned within the opening 60 formed in the trim panel 32 of the frame 14, FIG. 5 is a perspective top view of the grommet 100 supported within the opening 60 formed in the trim panel 32 of the frame 14, and FIG. 6 is a perspective view of the grommet 100. The grommet 100 may be configured to receive and to support the coil cord 50, such as the first straight portion 72, 74 of the coil cord 50 that extends from the opening 82 at the first end 84 of the longitudinally-extending portion 80 of the hollow member 44. In some embodiments, the grommet 100 may be configured to clasp or clamp about the coil cord 50 (e.g., via an interference or friction fit) to block movement of the coil cord 50 through the grommet 100. Thus, the coil cord 50 does not move or slide through the grommet 100 as the door 18 moves between the closed position 38 and the open position.

As shown in FIG. 5, the grommet 100 includes a groove 102 (e.g., annular or c-shaped groove) that is formed in a radially-outer surface (e.g., annular surface) of the grommet 100 and that extends about a circumference of the grommet 100. The groove 102 may enable the grommet 100 to be slideably inserted into engagement with the trim panel 32. In the illustrated embodiment, the groove 102 is disposed between radially-expanded portions 104 of the grommet 102. Thus, when the grommet 100 is inserted into a recess 106 (e.g., corresponding groove) formed in the frame 14 (e.g., the trim panel 32 of the frame 14), the radially-expanded portions 104 engage the frame 14 to retain the grommet 100 within the frame 14.

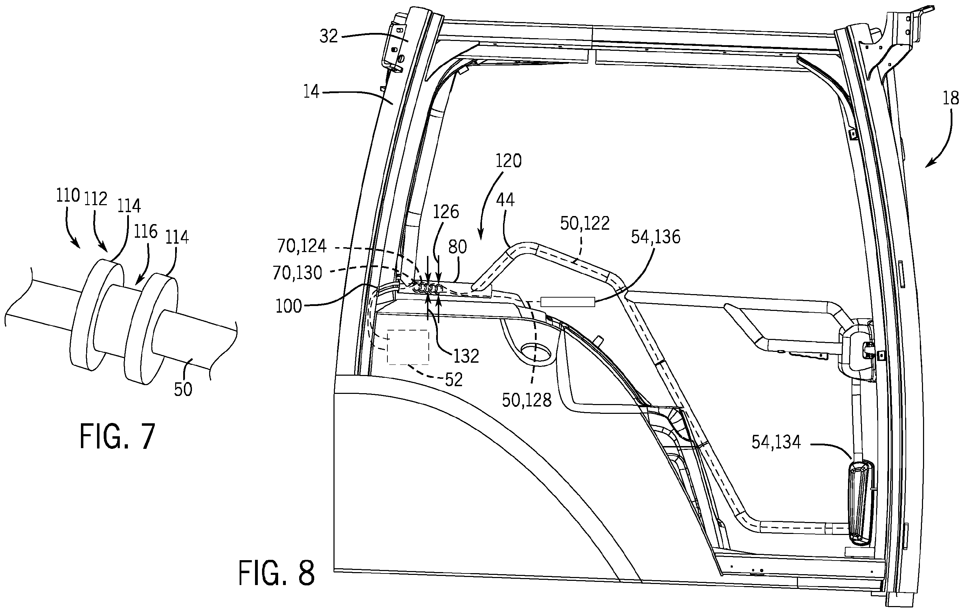

As shown in FIG. 6, the grommet 100 is a c-shaped ring or split ring, which may facilitate placement of the grommet 100 about the coil cord 50. The grommet 100 includes the groove 102, the radially-expanded portions 104, and an opening 108 that receives the coil cord 50, and the grommet 100 is positioned within the recess 106 of the frame 14 (e.g., the trim panel 32 of the frame 14). While the illustrated embodiments show the grommet 100 as a physically separate structure that is configured to receive the coil cord 50 to facilitate discussion, it should be understood that any of a variety of configurations and/or strain relief devices may be utilized to hold or fix the coil cord 50 at the opening 60 formed in the trim panel 32 of the work vehicle 10 to block movement of the coil cord 50 through the opening 60), thereby providing strain relief and/or dimensionally controlling the position of the coil cord 50 relative to the trim panel 32. For example, a bushing, an annular sleeve, and/or a snap-on strain relief housing may be provided about and/or coupled to the coil cord 50 (e.g., via an interference or friction fit) and attached to the work vehicle 10 (e.g., via fasteners, such as bolts, an interference fit, a key-slot interface, or the like). In some embodiments, the grommet 100 or other strain relief device may be integrally formed with the coil cord 50, thus forming a one-piece coil cord 50 having the strain relief device or feature. For example, FIG. 7 illustrates a coil cord assembly 110 having an integral grommet 112 molded onto and integrally formed with the coil cord 50. The illustrated grommet 112 includes two radially-extending portions 114 (e.g., annular protrusions) that define or are separated from one another by a groove 116 (e.g., annular or c-shaped groove) that is configured to receive or fit within the recess 106 of the frame 14 (e.g., the trim panel 32 of the frame 14). When the groove 116 of the grommet 112 is inserted into the recess 106 formed in the frame 14, the radially-expanded portions 114 engage the frame 14 to hold the coil cord 50 at the frame 14. In some embodiments, the coil cord assembly 110 is manufactured (e.g., via a molding process) and then installed as a unit into the work vehicle 10 (e.g., the grommet 112 portion is inserted into the recess 106 shown in FIGS. 5 and 6) to secure the coil cord 50 to the trim panel 32 of the work vehicle 10. In some embodiments, an adhesive may be utilized to couple the grommet 100, 112 to the frame 14.

It should be appreciated that the strain relief devices disclosed herein may be attached (e.g., snapped) into place about the coil cord 50 or molded on the coil cord 50 (e.g., forming a coil cord assembly having the strain relief device or feature). As noted above, in some embodiments, the grommet 100, 112 or other strain relief device may be positioned along the coil cord 50 such that the coil cord 50 is in some tension even while the door 18 is in the closed position 38 so that the portion of the coil cord 50 that extends across the gap 78 does not bend, thereby protecting the coil cord 50 and/or enabling movement of the door 18. The strain relief devices may enable repeatable and/or accurate installation of the coil cord 50 into the work vehicle 10, thereby facilitating efficient manufacturing of the work vehicle 10 and/or providing a configuration that protects the coil cord 50 during operation of the door 18.

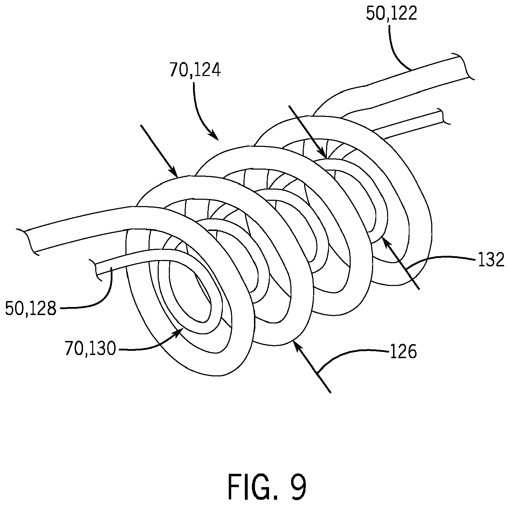

FIG. 8 is a side view of an embodiment of a wire routing system 120 having multiple coil cords 50 that may be used in the work vehicle 10. In the illustrated embodiment, a first coil cord 50, 122 includes a respective coil portion 70, 124 having a first diameter 126, and a second coil cord 50, 128 includes a respective coil portion 70, 130 having a second diameter 132, less than the first diameter 126. As shown, the respective coil portion 70, 130 of the second coil cord 50, 128 is positioned within the respective coil portion 70, 124 of the first coil cord 50, 122. For clarity, FIG. 9 illustrates a perspective view of the respective coil portion 70, 130 of the second coil cord 50, 128 positioned within the respective coil portion 70, 124 of the first coil cord 50, 122.

In operation, both the first coil cord 50, 122 and the second coil cord 50, 128 may lengthen (e.g., move from respective retracted positions to extended positions) simultaneously as the door 18 moves from the closed position 38 to the open position. Such a configuration may enable the use of multiple electrical components 54 within the door 18. For example, the first coil cord 50, 122 couples the power supply 52 to a first electrical component 54, 134, and the second coil cord 50, 128 couples the power supply 52 to a second electrical component 54, 136. It should be understood that in certain embodiments, any suitable number of coil cords 50 (e.g., 1, 2, 3, 4, 5, or more) may extend through the hollow member 44 and/or may be positioned such that the respective coiled portions 70 are positioned within one another. Furthermore, the first coil cord 50, 122 and/or the second coil cord 50, 128 may have any of the features described above with respect to FIGS. 1-7. For example, the coil cords 50 may be supported within the longitudinally-extending portion 80 of the hollow member 44 and/or may not be attached to any portion of the hollow member 44. For example, in some embodiments, each coil cord may be extend through and be supported by a respective strain relief device, such as a grommet 100, that engages the trim panel 32.

While only certain features of the disclosure have been illustrated and described herein, many modifications and changes will occur to those skilled in the art. It is, therefore, to be understood that the appended claims are intended to cover all such modifications and changes as fall within their scope of protection.

## Claims

1. A work vehicle (10) comprising:
a frame (14) with a trim panel (32) and a tubular support member (44) coupled to a door (18) of the work vehicle (10); and
a coil wire (50) configured to conduct current from a power supply (52) within the work vehicle (10) to an electrical component (54) supported by the door (18), wherein a coiled portion (70) of the coil wire (50) is configured to be disposed within the tubular support member (44) and to transition from a retracted position when the door (18) is in a closed position to an extended position when the door is in an open position, wherein said coil wire (50) and said tubular support member (44) extend between an opening (60) formed in the trim panel (32) and the electrical component (54) and wherein an entirety of the coiled portion (70) is disposed within the tubular support member (44) when the door (18) is in the closed position and in the open position.

2. The work vehicle of claims 1, wherein a straight portion (72) of the coil wire (50) extends from an end of the tubular support member and through an opening in a frame of the work vehicle to reach the power supply.

3. The work vehicle of claims 1-2, comprising a strain relief device (100), wherein the strain relief device (100) comprises an opening (108) configured to receive the coil wire (50), and the strain relief device (100) is configured to engage a frame (14) of the work vehicle (10) to attach the coil wire (50) to the frame (14) of the work vehicle (10).

4. The work vehicle of claim 3, wherein the strain relief device (100) and the coil wire (50) are coupled to one another via an interference fit that blocks the coil wire (50) from sliding through the opening (108) of the strain relief device (100) as the door (18) moves between the closed position and the open position.

5. The work vehicle of claims 1 and 2, comprising a strain relief device (112) that is integrally formed with the coil wire (50).

6. The work vehicle of claims 4-5, wherein the strain relief device (100, 112) comprises a grommet (100, 112) comprising a groove (102, 116) formed in a radially-outer annular wall of the grommet (100, 112) that enables the grommet (100, 112) to slide into a corresponding recess (106) of the frame (14) of the work vehicle (10), and the grommet (100, 112) comprises radially-expanded portions (104, 114) that engage the frame (14) of the work vehicle (10) to block movement of the grommet (100, 112) relative to the frame (14) of the work vehicle (10).

7. The work vehicle of claims 1-6, wherein the coil wire (50) is not attached to the tubular support member (44).

8. The work vehicle of claims 1-7, comprising the electrical component (54), wherein the electrical component (54) comprises one of a door lock or a window wiper.

9. The work vehicle of claims 1-7, wherein the electrical component (54) comprises a door lock.

10. The work vehicle of claims 1-7, wherein the electrical component (54) comprises a window wiper.

11. The work vehicle of claims 1-10, wherein the power supply (52) is supported by a frame (14) of the work vehicle (10).

12. The work vehicle of claim 1-11, wherein the coil wire (50) is in tension while the door (18) is in the closed position such that a portion of the coil wire (50) that extends across a gap (78) between the tubular support member (44) and the door (18) does not bend while the door (18) is in the closed position.

13. The work vehicle of claims 1-12, comprising another coil wire (50, 128) configured to conduct current from the power supply (52) within the work vehicle (10) to another electrical component (54, 136) supported by the door (18), wherein a respective coiled portion (70, 130) of the another coil wire (50, 128) is configured to be disposed within the tubular support member (44) and within the coiled portion (70) of the coil wire (50), and the respective coiled portion (70, 130) of the another coil wire (50, 128) is configured to transition from a respective retracted position when the door (18) is in the closed position to a respective extended position when the door (18) is in the open position.

14. The work vehicle of claim 13, wherein the another electrical component (54, 136) comprises one of a door lock or a window wiper.

## Patentansprüche

1. Nutzfahrzeug (10) mit:
einem Rahmen (14) mit einer Verkleidung (32) und einem rohrförmigen Stützelement (44), das mit einer Tür (18) des Nutzfahrzeugs (10) verbunden ist; und
einem Spiralkabel (50), das dazu eingerichtet ist, Strom von einer Stromquelle (52) innerhalb des Nutzfahrzeugs (10) zu einem elektrischen Bauteil (54) zu leiten, das von der Tür (18) getragen wird, wobei ein gewickelter Abschnitt (70) des Spiralkabels (50) dazu eingerichtet ist, innerhalb des rohrförmigen Stützelements (44) angeordnet zu sein und von einer eingezogenen Stellung, wenn sich die Tür (18) in einer geschlossenen Stellung befindet, in eine verlängerte Stellung überzugehen, wenn sich die Tür in einer offenen Stellung befindet, wobei sich das Spiralkabel (50) und das rohrförmige Stützelement (44) zwischen einer Öffnung (60), die in der Verkleidung (32) ausgebildet ist, und dem elektrischen Bauteil (54) erstrecken, und wobei der gesamte gewickelte Abschnitt (70) innerhalb des rohrförmigen Stützelements (44) angeordnet ist, wenn sich die Tür (18) in der geschlossenen Stellung und in der offenen Stellung befindet.

2. Nutzfahrzeug nach Anspruch 1, wobei sich ein gerader Abschnitt (72) des Spiralkabels (50) von einem Ende des rohrförmigen Stützelements und durch eine Öffnung in einem Rahmen des Nutzfahrzeugs erstreckt, um die Stromquelle zu erreichen.

3. Nutzfahrzeug nach den Ansprüchen 1 bis 2, umfassend eine Zugentlastungseinrichtung (100), wobei die Zugentlastungseinrichtung (100) eine Öffnung (108) umfasst, die dazu eingerichtet ist, das Spiralkabel (50) aufzunehmen, und wobei die Zugentlastungseinrichtung (100) dazu eingerichtet ist, mit einem Rahmen (14) des Nutzfahrzeugs (10) einzugreifen, um das Spiralkabel (50) am Rahmen (14) des Nutzfahrzeugs (10) anzubringen.

4. Nutzfahrzeug nach Anspruch 3, wobei die Zugentlastungseinrichtung (100) und das Spiralkabel (50) mittels einer Presspassung miteinander verbunden sind, die das Spiralkabel (50) daran hindert, durch die Öffnung (108) der Zugentlastungseinrichtung (100) zu rutschen, wenn sich die Tür (18) zwischen der geschlossenen Stellung und der offenen Stellung bewegt.

5. Nutzfahrzeug nach Anspruch 1 und 2, umfassend eine Zugentlastungseinrichtung (112), die integral mit dem Spiralkabel (50) ausgebildet ist.

6. Nutzfahrzeug nach den Ansprüchen 4 bis 5, wobei die Zugentlastungseinrichtung (100, 112) eine Tülle (100, 112) umfasst, die eine Nut (102, 116) aufweist, die in einer radial äußeren ringförmigen Wand der Tülle (100, 112) ausgebildet ist und die es der Tülle (100, 112) ermöglicht, in eine entsprechende Ausnehmung (106) des Rahmens (14) des Nutzfahrzeugs (10) zu rutschen, und wobei die Tülle (100, 112) radial ausgeweitete Abschnitte (104, 114) umfasst, die den Rahmen (14) des Nutzfahrzeugs (10) ergreifen, um eine Bewegung der Tülle (100, 112) relativ zum Rahmen (14) des Nutzfahrzeugs (10) zu blockieren.

7. Nutzfahrzeug nach den Ansprüchen 1 bis 6, wobei das Spiralkabel (50) nicht am rohrförmigen Stützelement (44) angebracht ist.

8. Nutzfahrzeug nach den Ansprüchen 1 bis 7, umfassend das elektrische Bauteil (54), wobei das elektrische Bauteil (54) eines aus einem Türschloss oder einem Scheibenwischer umfasst.

9. Nutzfahrzeug nach den Ansprüchen 1 bis 7, wobei das elektrische Bauteil (54) ein Türschloss umfasst.

10. Nutzfahrzeug nach den Ansprüchen 1 bis 7, wobei das elektrische Bauteil (54) einen Scheibenwischer umfasst.

11. Nutzfahrzeug nach den Ansprüchen 1 bis 10, wobei die Stromquelle (52) vom Rahmen (14) des Nutzfahrzeugs (10) getragen wird.

12. Nutzfahrzeug nach den Ansprüchen 1 bis 11, wobei das Spiralkabel (50) unter Zug steht, während sich die Tür (18) in der geschlossenen Stellung befindet, sodass ein Abschnitt des Spiralkabels (50), der sich über einen Spalt (78) zwischen dem rohrförmigen Stützelement (44) und der Tür (18) erstreckt, nicht biegt, während sich die Tür (18) in der geschlossenen Stellung befindet.

13. Nutzfahrzeug nach den Ansprüchen 1 bis 12, umfassend ein weiteres Spiralkabel (50, 128), das dazu eingerichtet ist, Strom von einer Stromquelle (52) im Nutzfahrzeug (10) zu einem anderen elektrischen Bauteil (54, 136) zu leiten, das von der Tür (18) getragen wird, wobei ein entsprechender gewickelter Abschnitt (70, 130) des anderen Spiralkabels (50, 128) dazu eingerichtet ist, innerhalb des rohrförmigen Stützelements (44) und innerhalb des gewickelten Abschnitts (70) des Spiralkabels (50) angeordnet zu sein, und der entsprechende gewickelte Abschnitt (70, 130) des anderen Spiralkabels (50, 128) dazu eingerichtet ist, aus einer eingezogenen Stellung, wenn sich die Tür (18) in der geschlossenen Stellung befindet, in eine verlängerte Stellung überzugehen, wenn sich die Tür (18) in der geöffneten Stellung befindet.

14. Nutzfahrzeug nach Anspruch 13, wobei das andere elektrische Bauteil (54, 136) eines aus einem Türschloss oder einem Scheibenwischer umfasst.

## Revendications

1. Tracteur (10) comprenant :
un cadre (14) comportant un panneau de garnissage (32) et un élément de support tubulaire (44) couplé à une porte (18) du tracteur (10) ; et
un fil spiralé (50) configuré pour conduire un courant depuis une alimentation électrique (52) à l'intérieur du tracteur (10) jusqu'à un composant électrique (54) supporté par la porte (18), dans lequel une partie spiralée (70) du fil spiralé (50) est configurée pour être disposée à l'intérieur de l'élément de support tubulaire (44) et pour passer d'une position rétractée lorsque la porte (18) est en position fermée à une position étendue lorsque la porte est dans une position ouverte, dans lequel
ledit fil spiralé (50) et ledit élément de support tubulaire (44) s'étendent entre une ouverture (60) aménagée dans le panneau de garnissage (32) et le composant électrique (54) et dans lequel
la totalité de la partie spiralée (70) est disposée à l'intérieur de l'élément de support tubulaire (44) lorsque la porte (18) est dans la position fermée et dans la position ouverte.

2. Tracteur selon la revendication 1, dans lequel une partie droite (72) du fil spiralé (50) s'étend depuis une extrémité de l'élément de support tubulaire et à travers une ouverture dans un cadre du tracteur pour arriver à l'alimentation électrique.

3. Tracteur selon la revendication 1-2, comprenant un dispositif détendeur (100), dans lequel le dispositif détendeur (100) comprend une ouverture (108) configurée pour recevoir le fil spiralé (50), et le dispositif détendeur (100) est configuré pour se mettre en prise dans un cadre (14) du tracteur (10) afin de fixer le fil spiralé (50) au cadre (14) du tracteur (10).

4. Tracteur selon la revendication 3, dans lequel le dispositif détendeur (100) et le fil spiralé (50) sont accouplés l'un à l'autre par un ajustement serré qui empêche le fil spiralé (50) de glisser à travers l'ouverture (108) du dispositif détendeur (100) lorsque la porte (18) se déplace entre la position fermée et la position ouverte.

5. Tracteur selon la revendication 1 et 2, comprenant un dispositif détendeur (112) intégré au fil spiralé (50).

6. Tracteur selon l'une des revendications 4 à 5, dans lequel le dispositif détendeur (100, 112) comprend un serre-câble (100, 112) comprenant une rainure (102, 116) aménagée dans une paroi annulaire radialement extérieure du serre-câble (100, 112) qui permet au serre-câble (100, 112) de glisser dans une encoche correspondante (106) du cadre (14) du tracteur (10), et le serre-câble (100, 112) comprend des parties élargies radialement (104, 114) qui viennent en prise avec le cadre (14) du tracteur (10) afin d'empêcher le déplacement du serre-câble (100, 112) par rapport au cadre (14) du tracteur (10).

7. Tracteur selon l'une des revendications 1 à 6, dans lequel le fil spiralé (50) n'est pas fixé à l'élément de support tubulaire (44).

8. Tracteur selon l'une des revendications 1 à 7, comprenant le composant électrique (54), dans lequel le composant électrique (54) comprend une serrure de porte ou un essuie-glace.

9. Tracteur selon l'une des revendications 1 à 7, dans lequel le composant électrique (54) comprend une serrure de porte.

10. Tracteur selon l'une des revendications 1 à 7, dans lequel le composant électrique (54) comprend un essuie-glace.

11. Tracteur selon l'une des revendications 1 à 10, dans lequel l'alimentation électrique (52) est supportée par un cadre (14) du tracteur (10).

12. Tracteur selon l'une des revendications 1 à 11, dans lequel le fil spiralé (50) est tendu lorsque la porte (18) est dans la position fermée de telle manière qu'une partie du fil spiralé (50) qui s'étend à travers un espacement (78) entre l'élément de support tubulaire (44) et la porte (18) ne se plie pas lorsque la porte (18) est dans la position fermée.

13. Tracteur selon l'une des revendications 1 à 12, comprenant un autre fil spiralé (50, 128) configuré pour conduire un courant de l'alimentation électrique (52) à l'intérieur du tracteur (10) jusqu'à un autre composant électrique (54, 136) supporté par la porte (18), dans lequel une partie spiralée respective (70, 130) de l'autre fil spiralé (50, 128) est configurée pour être disposée à l'intérieur de l'élément de support tubulaire (44) et à l'intérieur de la partie spiralée (70) du fil spiralé (50), et la partie spiralée respective (70, 130) de l'autre fil spiralé (50, 128) est configurée pour passer d'une position rétractée respective lorsque la porte (18) est dans la position fermée à une position étendue respective lorsque la porte (18) est dans la position ouverte.

14. Tracteur selon la revendication 13, dans lequel l'autre composant électrique (54, 136) comprend une serrure de porte ou un essuie-glace.
